# EUROPÄISCHE PATENTSCHRIFT

(11) **EP 2 639 058 B1**
(45) Veröffentlichungstag und Bekanntmachung des Hinweises auf die Patenterteilung: **12.08.2020**
(21) Anmeldenummer: 13001279.2
(22) Anmeldetag: 13.03.2013
(51) Int. Cl.: B32B 17/10, A62C 2/06, F16L 5/04, B32B 27/42, B32B 1/08

(54) **Brandschutz-Rohrmanschette**
Fire protection tube cuff
Manchon ignifuge

(30) Priorität: 14.03.2012 DE 202012002553 U
(43) Veröffentlichungstag der Anmeldung: 18.09.2013
(73) Patentinhaber: Etex Building Performance GmbH, 4021 Linz (AT)
(72) Erfinder: Gauch, Edwin, 4021 Linz (AT)
(74) Vertreter: Vaeck, Elke

(56) Entgegenhaltungen:
- EP-A1- 1 837 573
- EP-A2- 0 787 784
- WO-A1-87/00761
- DE-U1- 9 000 975
- DE-U1-202005 004 339
- US-A1- 2011 302 856

## Beschreibung

Die vorliegende Erfindung betrifft eine Vorrichtung zur Abschottung eines Leitungsstrangs, insbesondere in Form einer Rohrmanschette, mit einem Gehäuse und mit einer in dem Gehäuse ausgebildeten Durchführöffnung für den Leitungsstrang, wobei an der Innenwandung des Gehäuses ein intumeszierendes Brandschutzelement angeordnet ist.

Vorrichtungen der eingangs genannten Art sind aus dem Stand der Technik bekannt. So beschreibt die DE 43 21 307 A1 eine Rohrmanschette aus Metall, die auf der Innenseite ihres Gehäusemantels mit einem intumeszierenden, also unter Brandeinwirkung aufschäumenden Material ausgekleidet ist. Die Manschette besteht aus zwei zylindrischen Segmenten mit halbkreisförmigem Querschnitt, die beim Einbau der Manschette um die abzuschottenden Leitungen herumgelegt und anschließend miteinander verschraubt werden. Alternativ wird vorgeschlagen, die Rohrmanschette aus einem Element aufzubauen, das entlang der Manschettenlängsachse aufgeklappt werden kann, um auf diese Weise die abzuschottenden Leitungen zu umgreifen. Die Rohrmanschette ist in dieser Ausführung mit einer Lasche versehen, mit deren Hilfe die Manschette verschlossen werden kann.

Eine weitere Ausführung einer Rohrmanschette zur Abschottung eines Leitungsstrangs ist in der DE 10 2007 000 040 A1 offenbart. Die Rohrmanschette weist ein rohrförmiges Metallgehäuse auf, in welchem zwei in Durchführungsrichtung hintereinander angeordnete Brandschutzelemente angeordnet sind. In beiden Brandschutzelementen ist ein intumeszierender Wirkstoff enthalten, der nach Überschreiten einer festgelegten Initialtemperatur durch Gasblasenbildung eine starke Volumenvergrößerung erfährt. Die beiden Brandschutzelemente sind dabei so ausgestaltet, dass diese Initialtemperatur unterschiedlich hoch ist. Das führt im Brandfall dazu, dass die Brandschutzelemente nacheinander aktiviert werden. Hierdurch soll eine bessere Abdichtung des Durchlasses erzielt werden, vor allem, wenn sich im Inneren der Rohrmanschette eine Vielzahl durchgeführter Leitungen befindet.

Eine weitere Ausführungsform eines Rohrmanschettesystems zur Abschottung eines Leitungsstrangs ist in der EP 837573 A4 offenbart. Die Rohrmanschette weist ein rohrformiges Gehause auf, wobei an der Innenwand des Gehauses ein intumeszierendes Brandschutzelement in Form eines elastisch verformbaren Stopfens angeordnet ist Das System umfasst ferner ein Blockierelement, um die Bewegung des Stopfens zu behindern und um sicherzustellen, dass der Stecker zusammengedrückt wird, anstatt in seiner Gesamtheit bewegt zu werden. Das Sperrelement kann aus Metall sein, aber in Fallen, in denen das Sperrelement an der Rohrmanschette fixierbar ist, konnen diese auch aus einem harten Kunststoff hergestellt sein, wie beispielsweise Polyetherimid (PEI) oder alternativ Polyethersulfonamid (PES)

Schließlich ist aus der DE 101 38 726 A1 ein bandförmiges Abdichtungsmaterial bekannt, das aus einem bandförmigen endlos-Trager mit darauf in Langsrichtung zueinander beabstandeten und quer zum Trager verlaufenden Streifen aus einem intumeszierenden Brandschutzmaterial gebildet ist. Der bandförmige Träger besteht aus einer Aluminiumfolie, auf welcher die Streifen aus dem Brandschutzmaterial aufgeklebt sind. Zur Erstellung einer Rohrmanschette wird eine geeignete Länge dieses Bandmaterials abgetrennt und um die abzuschottende Rohrleitung gelegt

Bei einer derartigen Ausfuhrung wird es zum Teil als nachteilig empfunden, dass sich in Ermangelung einer ausreichenden Eigenstabilitat solche Abdichtungsmaterialien allenfalls für die Unterputzmontage eignen. Mit anderen Worten handelt es sich nicht um eine dimensionsstabile Rohrmanschette sondern um ein mit Intumeszenzkörpern bestücktes flexibles Metallband Damit konnen zudem vernünftigerweise nur Einzelleitungen abgedichtet werden, weil das Bandmaterial aufgrund seiner hohen Flexibilitat keine eigene Form vorzugeben vermag und beispielsweise bei der Durchfuhrung von zwei oder mehr Leitungen keinen runden Querschnitt beibehalt, sondern der Profilvorgabe durch das Leitungsbundel folgt.

Bei den zuvor genannten Rohrmanschetten ist es teilweise von Nachteil, dass diese nur in der vorgefertigten Form verwendet, nicht hingegen durch einfache Maßnahmen auf der Baustelle angepasst werden können. So kann die aus der DE 10 2007 000 040 A1 bekannte Rohrmanschette nicht gekürzt werden, da dadurch eines der Brandschutzelemente entfernt oder doch zumindest erheblich verkleinert wurde, so dass die ausgelobte Funktionalitat womoglich nicht mehr gegeben ist.

Selbst wenn man die bislang bekannten Rohrmanschetten bearbeiten konnte, so bestunde dennoch ein erhebliches Problem darin, dass die beim Durchtrennen des metallischen Mantelmaterials häufig Temperaturen auftreten, die oberhalb der Initialtemperatur des Brandschutzelements liegen Mit anderen Worten kann es leicht zu einem vorzeitigen Aufschaumen des Brandschutzelements wahrend der Bearbeitung kommen, wodurch die gesamte Rohrmanschette unbrauchbar wurde Schließlich sind die vorgenannten Rohrmanschetten in der Herstellung recht aufwandig, was die Produktionskosten negativ beeinflusst Auch ist der aus Korrosionsschutzgrunden für das Gehäuse einer solchen Rohrmanschette verwendete Edelstahl ein teurer Rohstoff

Die der vorliegenden Erfindung zugrunde liegende Aufgabe bestand also darin, eine Vorrichtung zur Abschottung eines Leitungsstrangs anzugeben, die sich nachtraglich und mit einfachen Mitteln bearbeiten lasst, insbesondere auf der Baustelle und zudem einfach und gunstig herzustellen ist

Diese Aufgabe wird gelost durch eine Vorrichtung gemäss Anspruch 1.

Der Erfindung liegt die Erkenntnis zugrunde, dass die bei den bislang bekannten dimensionsstabilen Rohrmanschetten grundsatzlich verwendeten Metallgehause durch solche aus einem duroplastischen Kunststoff ersetzte werden konnen Trotz des Einsatzes eines Kunststoffs anstelle von Metall sind die erfindungsgemäßen Vorrichtungen dennoch in brandschutztechnischer Hinsicht fur ein nahezu identisches Einsatzspektrum verwendbar Das liegt unter anderem daran, dass sich Duroplasten aufgrund ihrer dreidimensionalen Vernetzung durch Hitzeeinwirkung nicht mehr verflussigen lassen. Dadurch bleibt die Rohrmanschette auch bei höherer Temperaturbeanspruchung dimensionsstabil, schmilzt also nicht.

Die erfindungsgemaße Vorrichtung kann insbesondere als Rohrmanschette sowohl in einer Aufputz- als auch in einer Unterputzvariante ausgestaltet werden. Diese beiden Ausfuhrungsformen unterscheiden sich in erster Linie darin, dass bei der Aufputzvariante noch eine Befestigungseinrichtung an der Vorrichtung beziehungsweise an dem Gehäuse der Vorrichtung vorgesehen ist. Diese Befestigungseinrichtung kann jedoch ohne weiteres auch an der Unterputzform vorgesehen sein, so dass ein und dieselbe Ausfuhrungsform fur beide Montageformen einsetzbar ist. Bei der Unterputzform kann die Befestigungsvorrichtung beispielsweise als Anschlag dienen, um eine definierte Einschubtiefe der Rohrmanschette sicher zu stellen.

Als Befestigungselement kommt insbesondere ein flanschartiges Befestigungselement in Frage, das vorzugsweise an einer der Stoßkanten des Gehäuses außenseitig umlaufend angeordnet ist. In Abwandlung hiervon können auch mehrere Befestigungslaschen vorgesehen sein, die insbesondere außenseitig umlaufend angeordnet sind. Sowohl der Flansch als auch die Befestigungslaschen sind zweckmäßigerweise mit Löchern versehen, durch welche Befestigungsmittel zur Anbringung der Vorrichtung an einer Wand oder einer Decke hindurchgeführt werden können, wie beispielsweise Schrauben.

Was die äußere Gestaltung der erfindungsgemäßen Vorrichtung betrifft, so gibt es eine Vielzahl möglicher Realisierungen. So kann der Querschnitt des Gehäuses quer zur Durchlassöffnung einen runden, einen ovalen, einen drei-, vierbeziehungsweise vieleckige Form besitzen, wobei kreisrunde Querschnitte bevorzugt sind. In diesem Fall hat das Gehäuse typischerweise eine Zylinderform. Die Vorrichtung kann zudem auf 90° Durchlässe oder aber auch für schräg verlaufende Durchlässe vorgeformt werden.

Was die erfindungsgemäß einsetzbaren Duroplaste betrifft, so können prinzipiell sämtliche bekannten duroplastischen Polymere eingesetzt werden. Vorzugsweise sind diese ausgewählt aus Phenolharzen, Epoxiden, Aminoplasten wie Melaminharzen, Melaminformaldehydharzen, Harnstoffharze, Diallylphthalatharze, Dissoallylphthalatharze, Polyacrylaten, Polyesterharzen, Polyurethanharze, Silikonharzen, vernetztem Butylkautschuk, Ethylen-Propylen-Terpolymeren (EPDM), Polyoxymethylen (POM) oder Mischungen von diesen.

Zur Herstellung des Gehäuses können prinzipiell sämtliche für die Formgebung von Duroplasten bekannte Fertigungs- beziehungsweise Formgebungsmethoden eingesetzt werden. Dies sind beispielsweise Spritzgießen, Pressen und Spritzpressen.

In vorteilhafter Weiterbildung der vorliegenden Erfindung wird der Duroplast jedoch nicht als alleiniges Material für das Gehäuse verwendet, sondern das Material weist zusätzlich einen oder mehrere Füllstoffe auf. Dies ist von Vorteil, weil auf diese Weise die mechanische Stabilität des Gehäuses vor allem unter Hitzeinwirkung verbessert werden kann.

Diese positiven Eigenschaften werden vor allem von einem so genannten hochgefüllten Duroplasten erfüllt. Dabei handelt es sich typischerweise um einen duroplastischen Kunststoff, der einen besonders hohen Anteil an Füllstoffen aufweist. Zu diesem Zweck kann der Füllstoffanteil insbesondere bei 20 bis 90 Gew.-% liegen, vorzugsweise bei 30 bis 85 Gew.-%, besonders bevorzugt bei 40 bis 80 Gew.-%.

Als im Rahmen der vorliegenden einsetzbare Füllstoffe kommen prinzipiell sämtliche Füllstoffe in Frage, die sich in ein duroplastisches Polymer einbetten lassen. Diese sind insbesondere ausgewählt aus mineralischen oder organischen Füllstoffen, insbesondere aus Sand, beispielsweise Quarzsand, Quarzmehl, Ton, Lehm, Talk, Glimmer, Kaolin, Neuburger Kieselerde, Schwerspat, silikatischen Füllstoffe vom Typ des Aluminium-Magnesium-Calcium-Silicats, z. B. Wollastonit, Chlorit, Fällungskieselsäuren, pyrogenen Kieselsäuren, Glasfasern, Glaskugeln, Glasbruch, Carbonate oder Sulfate wie gemahlenen oder gefällten Kreiden, Dolomit, Bayerit, Gips, Aluminium-/Magnesiumhydroxiden, aus Magnesium-, Zink- oder Calciumoxiden, Ruß, Calcium-Magnesiumcarbonaten, keramischen und mineralischen Fasern, Karbonfasern und Mischungen hiervon. Die Korngröße kann zwischen 1 bis 200 µm betragen, insbesondere zwischen 3 bis 50 µm. Auch nanoskalige Füllstoffe, beispielsweise auf SiO₂ oder TiO₂-Basis, können eingesetzt werden.

Zusätzlich oder alternativ zu den vorgenannten Füllstoffen kann der Duroplast des Gehäusematerials Hilfsstoffe umfassen, die insbesondere ausgewählt sind aus Harzen, Stabilisatoren, Pigmenten, Flammschutzmitteln oder Mischungen von diesen.

Als Pigmente sind nicht reaktive, feinteilige anorganische Mineralien geeignet. Diese können gemahlen, gefällt oder an ihrer Oberfläche behandelt sein. Beispiele sind Kreide, beschichtete Kreide, Kalkmehl, Calcium-Magnesium-Carbonate, Aluminiumoxide und -hydroxide, gefällte Kieselsäure, Titandioxid, Bariumsulfat, Natrium- oder Aluminiumsilikate, Zeolithe, Bentonite oder gemahlene Mineralien. Die Korngröße soll zwischen 1 bis 200 µm betragen, insbesondere zwischen 3 bis 50 µm. Zu beachten ist hierbei, dass es zwischen den verwendbaren Füllstoffen und den Pigmenten stofflich häufig keine klare Abgrenzung gibt, da beispielsweise Kreide sowohl als Füllstoff, als auch als Weißpigment Verwendung finden kann.

Zu im Rahmen der Erfindung als Hilfsstoffe einsetzbaren Stabilisatoren, insbesondere UV-Stabilisatoren oder Antioxidantien, zählen Phosphite, Phenole, sterisch gehinderte Phenole hohen Molekulargewichts, polyfunktionelle Phenole, schwefel- und phosphorhaltige Phenole oder Amine.

Vorliegend einsetzbare Flammschutzmittel sind beispielsweise polybromierte Diphenylether (PentaBDE, OctaBDE, DecaBDE), TBBPA und HBCD, Melamin, Harnstoff, APP (Ammoniumpolyphosphat), TCEP (Tris(chlorethyl)phosphat), TCPP (Tris(chlorpropyl)phosphat), TDCPP (Tris(dichlorisopropyl)phosphat), TPP (Triphenylphosphat), TEHP (Tris-(2-ethylhexyl)phosphat), TKP (Trikresylphosphat), ITP ("Isopropyliertes Triphenylphosphat") Mono-, Bis- und Tris(isopropylphenyl)phosphate unterschiedlichen Isopropylierungsggrades, RDP (Resorcinol-bis(diphenylphosphat)), BDP (Bisphenol-A-bis(diphenylphosphat)), ATH (Aluminiumhydroxid), MDH (Magnesiumhydroxid), Ammoniumsulfat ((NH₄)₂SO₄) und -phosphat ((NH₄)₂PO₄), EDAP (Ethylendiaminphosphat), GP (Guanidinphosphat oder auch Mischungen von diesen.

Nach einer bevorzugten Ausführungsform der erfindungsgemäßen Vorrichtung umfasst das Gehäuse wenigstens zwei Gehäusesegmente, insbesondere zwei, drei oder vier Segmenten - vorteilhafterweise wird für das Gehäuse und das Brandschutzelement eine gleiche Anzahl an Segmenten verwendet, die auch weiter bevorzugt bezüglich ihrer Breite miteinander korrelieren. Die Segmente können miteinander zu einer Art Gliederkette miteinander verbunden sein. Eine solche Aufteilung des Gehäuses ist besonders vorteilhaft, da sich ein zu ummantelnder Kabelstrang oder eine zu ummantelnde Rohrleitung mit einfachen Handgriffen mittels einer solchen Vorrichtung, beispielsweise in Form einer Rohrmanschette, einfassen lässt.

Bei der zuvor beschriebenen Ausführungsform wird die Handhabung insbesondere bei zwei Gehäusesegmenten besonders erleichtert, wenn die Gehäusesegmente parallel zur Gehäuselängsrichtung gegenüber einander verschwenkbar sind, insbesondere über ein Scharnier. Zweckmäßigerweise weist die Vorrichtung bei dieser Ausführungsform zwei Gehäusesegmente auf. Dann ist zur Anbringung die Rohrmanschette nur aufzuklappen, um den Kabelstrang oder die Rohrleitung zu legen, die Rohrmanschette danach zu schließen und gegebenenfalls zu arretieren. Zu diesem Zweck können eines oder beide Gehäusesegmente über eine Arretiereinrichtung verfügen.

Alternativ zu der verschwenkbaren Gehäuseausführung können die Gehäusesegmente Einschubeinrichtungen aufweisen, über welche die Gehäusesegmente miteinander verbunden sind. Derartige Einschubeinrichtungen können beispielsweise als korrespondierende Nuten und Federn ausgestaltet sein. Besonders bevorzugt sind für diesen Zweck Nuten mit einer Hinterschneidung sowie entsprechend angepasste Federn, insbesondere Schwalbenschwanznuten.

Des Weiteren sind Verbindungsmöglichkeiten einsetzbar, wie sie von Uhrenarmbändern bekannt sind. In einem solchen Fall ist ein zusätzlicher Verschluss nicht unbedingt erforderlich, sondern die Manschette wird auf die gleiche Art geschlossen, wie auch die Glieder aneinander gereiht werden, das heißt durch Einlegen miteinander korrespondierender Scharnierteile und Einschieben eines Stiftes.

Es liegt ebenso im Rahmen der vorliegenden Erfindung, zur Verbindung der Segmente des Gehäuses beziehungsweise des Brandschutzelements die jeweiligen Einzelsegmente so auszugestalten, wie es von Rollladenlamellen bekannt ist. Zur Verbindung eines ersten mit einem folgenden Segment wird das folgende Segment mit einem zylinderförmigen Anschlussbereich in eine entsprechende Ausnehmung des ersten Segments eingeschoben.

Die einzelnen Segmente des Gehäuses beziehungsweise des Brandschutzelements können auch so ausgeführt sein, dass sie eine Scharnierkette ergeben.

Zudem ist es möglich eine Gliederkette zu verwenden, in welche die Segmente des Brandschutzelements eingelegt werden. Ferner können die einzelnen Segmente mittels Befestigungslaschen miteinander verbunden und durch Schrauben fixiert werden.

Die zuvor ausgeführten Varianten sind nur beispielhaft zu verstehen - es sind durchaus noch weitere Verbindungsmöglichkeiten denkbar.

Im Rahmen dieser Ausführungsform kann das Gehäuse auch aus einer Vielzahl an Gehäusesegmenten aufgebaut sein, beispielsweise aus 5, 6, 7, 8, 9, 10, 11 oder 12 oder gar mehr Gehäusesegmenten. Die Gehäusesegmente stellen zweckmäßigerweise gleichgroße Kreissegmente beziehungsweise Zylindersegmente dar. Es ist jedoch ebenso möglich, dass die Kreissegmente jeweils verschieden große Kreisausschnitte darstellen.

Im Rahmen der vorliegenden Erfindung ist es ebenso vorgesehen, Segmente mit rechteckigem Querschnitt zu verwenden, was besonders vorteilhaft bei einer Unterteilung in fünf oder mehr Gehäusesegmente ist. Auch bei dieser Ausführungsform können die einzelnen Segmente gleiche oder auch verschieden große Querschnitte aufweisen, wobei die einzelnen Segmente vorteilhafterweise die gleiche Dicke aufweisen.

Wenn die verwendeten Gehäusesegmente jeweils nur einem kleinen Kreissegment von beispielsweise 10 oder 15° entspricht, kann der Gehäusedurchmesser zudem in gewissen Grenzen dadurch variiert werden, dass ein Gehäusesegment mehr oder eines weniger als diejenige Anzahl verwendet wird, die rechnerisch für einen geometrischen Kreisschluss benötigt würde. Dies ist deshalb möglich, weil jedes der Kreissegmente nur einen kleinen Winkelausschnitt darstellt und die Einschubeinrichtungen in einem gewissen Rahmen Toleranzen erlauben.

In Weiterbildung der erfindungsgemäßen Vorrichtung ist das Gehäuse und gewünschtenfalls das Brandschutzelement über ein Spritzgussverfahren herstellbar oder hiernach hergestellt. Dies ist besonders vorteilhaft, da die einzelnen Bauteile, vor allem aber das Gehäuse auf einfache Weise gefertigt werden kann.

Eine erfindungsgemäße Vorrichtung besitzt ein an der Innenseite des Gehäuses vorgesehenes Brandschutzelement. Dieses Brandschutzelement umfasst ein unter Hitzeeinwirkung aufschäumendes Material. Für diesen Anwendungszweck sind eine Reihe geeigneter Materialien bekannt. Besonders geeignet ist ein intumeszierendes Material, das ausgewählt ist aus silikatischen Materialien, insbesondere aus solchen auf Wasserglasbasis, expandierbarem Graphit (Blähgraphit), sowie Kombinationen hiervon.

Das Brandschutzelement kann unabhängig vom Gehäuseaufbau ein- oder auch mehrteilig ausgebildet sein. Bei mehrteiliger Ausführung ist ein Aufbau des Brandschutzelements aus mehreren kreissegmentförmigen Einzelelementen bevorzugt. Ist das Gehäuse ebenfalls segmentartig aufgebaut, ist es besonders vorteilhaft, wenn die Gehäusesegmente und die Brandschutzelement-Segmente eine identische Winkelgröße aufweisen und aneinander befestigt sind, mit anderen Worten also jeweils eine bauliche Untereinheit bilden.

Das Brandschutzelement kann auf jede denkbare Art in das Gehäuse eingebracht werden. Das Brandschutzelement kann in das Gehäuse eingelegt oder eingeklinkt oder aber auf die Gehäuseinnenseite beziehungsweise in das Gehäuse eingeklebt werden.

Es liegt jedoch ebenfalls im Rahmen der vorliegenden Erfindung, dass das Brandschutzelement erst auf der Gehäuseinnenwand erstellt wird, in dem eine flüssige oder pastöse Vorstufe des Brandschutzelements als Dichtmasse eingespritzt oder eingefüllt wird. Anschließend lässt man diese Vorstufe zum festen Brandschutzelement aushärten. Der Aushärtevorgang kann über einen chemischen Abbindeprozess, beispielsweise über Polymerisation eines in de Vorstufe enthaltenen Bindemittels vonstatten gehen, oder aber auch über Verdunsten eines Lösungsmittels, beispielsweise Wasser.

Besonders bevorzugt ist die Herstellung über ein Spritzgussverfahren. Hierbei erfolgt die Aushärtung des Brandschutzelements aus der Schmelze. Dieses Verfahren eignet sich sowohl für eine einteilige oder aber auch mehrteilige Ausgestaltung des Brandschutzelements. Im letztgenannten Fall kann die Fertigung über ein Mehrkomponentenspritzgussverfahren erfolgen, bei dem ein mehrteiliges Brandschutzelement in einem Fertigungsschritt auf einer Spritzgussmaschine hergestellt werden kann.

In weiterer Ausgestaltung der erfindungsgemäßen Vorrichtung ist in dem Gehäuse eine Dämmeinrichtung ausgebildet, insbesondere eine Schalldämmung.

Die vorliegende Erfindung wird im Folgenden anhand von in den beiden Figuren dargestellten Ausführungsformen näher erläutert. Hierbei zeigt
Fig. 1 eine erfindungsgemäße Rohrmanschette nach einer ersten Ausführungsform und
Fig. 2 eine Verbindungsmöglichkeit von Brandschutzelementen einer Rohrmanschette.

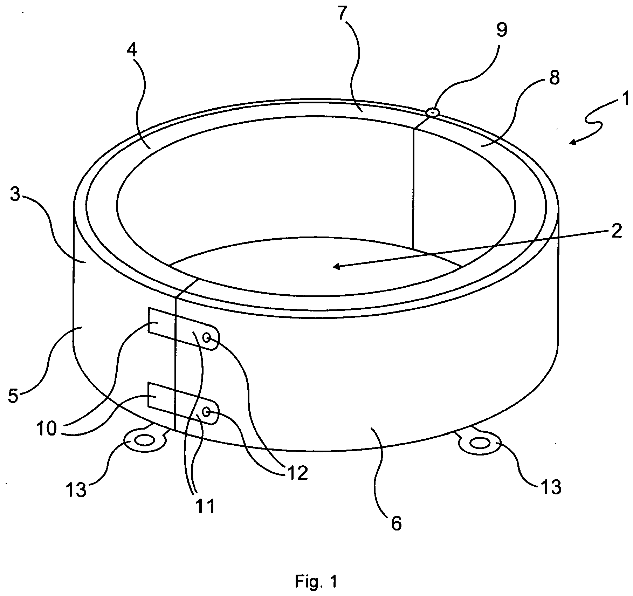

In der Fig. 1 ist eine erfindungsgemäße Vorrichtung in Form einer Rohrmanschette 1 mit einer Durchführöffnung 2 für einen vorliegend nicht dargestellten Leitungsstrang in dreidimensionaler Ansicht von schräg oben abgebildet. Die Rohrmanschette 1 setzt sich aus einem zylindrischen Gehäuse 3 und einem die gesamte Innenseite des Gehäuses 3 bedeckenden intumeszierenden Brandschutzelement 4 zusammen. Das Brandschutzelement 4 ist mit der Innenwandung des Gehäuses 3 verklebt.

Das Gehäuse 3 besteht aus einem hochgefüllten Duroplasten, vorliegend einem Melaminformaldehydharz mit etwa 45 Gew.-% mineralischem Füllstoffanteil. Das intumeszierende Brandschutzelement 4 besteht aus einem auf Blähgraphit basierendem Brandschutzmittel. Sowohl das Gehäuse (3) als auch das intumeszierende Brandschutzelement 4 sind über Spritzgussverfahren hergestellt.

Das zylindrische Gehäuse 3 setzt sich aus zwei gegeneinander parallel zur Gehäuselängsachse verschwenkbaren Gehäusesegmenten 5, 6 identischer Größe zusammen. Das intumeszierende Brandschutzelement 4 ist an denselben Positionen wie das Gehäuse 3 in zwei Brandschutzelement-Segmente 7, 8 unterteilt. Die Verschwenkbarkeit der Gehäusesegmente 5, 6 ist über ein Scharnier 9 am Gehäuse 3 gewährleistet.

Auf der dem Scharnier 9 gegenüber liegenden Außenseite des Gehäuses 3 sind zwei Arretiereinrichtungen 10 vorgesehen. Jede Arretiereinrichtung 10 weist eine mit einer Ausnehmung versehene Verschlusslasche 11 auf, die fest mit dem einen der Gehäusesegmente 5 verbunden ist. Die Arretiereinrichtung 10 umfasst zudem einen am anderen Gehäusesegment 6 befestigten verdickter Zapfen 12, der die Ausnehmung der Verschlusslasche 11 durchgreifen kann. Die Verdickung der Zapfen 12 weist einen geringfügig größeren Durchmesser als die Ausnehmung, so dass sich die Arretiereinrichtungen 10 nicht von selbst öffnen können.

Das Gehäuse 3 ist an seiner Außenseite mit vier an der unteren Stoßkante ansetzenden, gleichmäßig voneinander beabstandeten und radial von der Gehäuselängsachse wegweisende Befestigungslaschen 13 versehen, von denen aufgrund der perspektivischen Darstellung nur die vorderen zwei zu sehen sind. Jede der Befestigungslaschen 13 verfügt über eine Öffnung für ein Befestigungsmittel, mit welchem die Rohrmanschette 1 an einer Wand oder einer Decke befestigt werden kann. Zudem können die Befestigungslaschen 13 beim Unterputzeinbau als Anschlag dienen, um die Rohrmanschette 1 bündig in eine Decken- oder Wandöffnung einzusetzen.

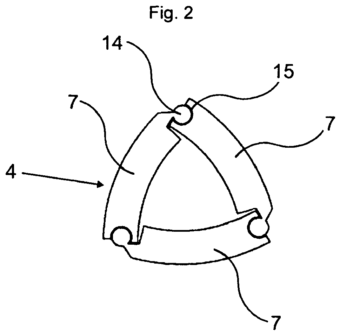

In Fig. 2 ist eine Verbindungsmöglichkeit von Brandschutzelement-Segmenten 7 einer Rohrmanschette 1 abgebildet, wobei das Gehäuse 3 vorliegend nicht dargestellt ist. Das gesamte Brandschutzelement 4 besteht vorliegend aus drei Brandschutzelement-Segmenten 7. Jedes der Brandschutzelement-Segmente 7 ist an der dem benachbarten Segment 7 zugewandten Seitenkante mit einem zylinderförmigen Verbindungsbereich 14, sowie gegenüberliegend hierzu mit einer mit dem zylinderförmigen Verbindungsbereich 14 korrespondierenden Ausnehmung 15 versehen.

Zur Verbindung zweier benachbarter Brandschutzelement-Segmenten 7 wird der zylinderförmigen Verbindungsbereich 14 des ersten Segments 7 in die korrespondierenden Ausnehmung 15 des folgenden Segments 7 eingeschoben.

Bei der Verwendung der in der Fig. 1 dargestellten Rohrmanschette 1 wird in der Weise vorgegangen, dass die Rohrmanschette 1 zunächst nach dem Entriegeln der Arretiereinrichtungen 10 durch eine Schwenkbewegung am Scharnier 9 geöffnet wird. Die geöffnete Rohrmanschette 1 wird dann über den abzuschottenden Leitungsstrang geschoben und durch Verschwenken entgegen der Öffnungsrichtung wieder geschlossen. Damit sich die Rohrmanschette 1 nicht von selbst öffnen kann, werden die Verschlusslaschen 11 über die korrespondierenden verdickten Zapfen 12 gedrückt und eingerastet, so dass die Arretiereinrichtungen 10 geschlossen sind.

Danach wird die geschlossene und gesicherte Rohrmanschette 1 entlang des Leitungsstrangs bis an die gewünschte Position geschoben, beispielsweise bis an einen Deckendurchbruch. Dort wird die Rohrmanschette mit Hilfe von durch die Öffnungen der Befestigungslaschen 13 geschobenen Schrauben in der Decke befestigt.

Im Brandfall schäumt durch die Hitzeeinwirkung das intumeszierende Brandschutzelement 4 auf und verschließt so die Zwischenräume zwischen dem Gehäuse 3 und den Leitungen des Leitungsstrangs völlig. Da das duroplastische Material des Gehäuses 3 nicht schmilzt sondern allenfalls mit der Zeit abbrennt, behält das Gehäuse 3 zumindest bis zum Abschluss des vollständigen Aufschäumens des Brandschutzelements 4 seine äußere Form weitestgehend bei.

### Bezugszeichenliste

- 1: Rohrmanschette
- 2: Durchgangsöffnung
- 3: Gehäuse
- 4: Brandschutzelement
- 5: Gehäusesegment
- 6: Gehäusesegment
- 7: Brandschutzelement-Segment
- 8: Brandschutzelement-Segment
- 9: Scharnier
- 10: Arretiereinrichtung
- 11: Verschlusslasche
- 12: verdickter Zapfen
- 13: Befestigungslasche
- 14: Zylinderförmiger Verbindungsbereich
- 15: Korrespondierende Ausnehmung

## Patentansprüche

1. Vorrichtung zur Abschottung eines Leitungsstrangs, insbesondere in Form einer Rohrmanschette(1), mit einem Gehäuse (3) und mit einer in dem Gehäuse (3) ausgebildeten Durchführöffnung (2) für den Leitungsstrang, wobei an der Innenwandung des Gehäuses (3) ein intumeszierendes Brandschutzelement (4) angeordnet ist,
**dadurch gekennzeichnet, dass** das Gehäusematerial aus einem Duroplasten oder aus einem Füllstoffe, bzw. Hilfstoffe, aufweisenden Duroplasten besteht.

2. Vorrichtung nach Anspruch 1, **dadurch gekennzeichnet, dass** der Duroplast ausgewählt ist aus Phenolharzen, Epoxiden, Aminoplasten wie Melaminharzen, Melaminformaldehydharzen, Polyacrylaten, Polyesterharzen, Polyurethanharze, Silikonharzen, vernetztem Butylkautschuk, Ethylen-Propylen-Terpolymeren (EPDM), Polyoxymethylen (POM) oder Mischungen von diesen.

3. Vorrichtung nach Anspruch 1 oder 2, **dadurch gekennzeichnet, dass** der Duroplast einen oder mehrere Füllstoffe aufweist.

4. Vorrichtung nach Anspruch 3, **dadurch gekennzeichnet, dass** das Duroplast ein hochgefüllter Duroplast ist.

5. Vorrichtung nach Anspruch 3 oder 4, **dadurch gekennzeichnet, dass** der Füllstoffanteil bei 20 bis 90 Gew.-% liegt, insbesondere 30 bis 85 Gew.-%.

6. Vorrichtung nach einem der Ansprüche 3 bis 5, **dadurch gekennzeichnet, dass** der Füllstoff ausgewählt ist aus mineralischen oder organischen Füllstoffen, insbesondere aus Sand, beispielsweise Quarzsand, Quarzmehl, Ton, Lehm, Talk, Glimmer, Kaolin, Neuburger Kieselerde, Schwerspat, silikatischen Füllstoffe vom Typ des Aluminium-Magnesium-Calcium-Silicats, z. B. Wollastonit, Chlorit, Fällungskieselsäuren, pyrogenen Kieselsäuren, Glasfasern, Glaskugeln, Glasbruch, Carbonate oder Sulfate wie gemahlenen oder gefällten Kreiden, Dolomit, Bayerit, Gips, Aluminium-/Magnesiumhydroxiden, aus Magnesium-, Zink- oder Calciumoxiden, Ruß, Calcium-Magnesiumcarbonaten, keramischen und mineralischen Fasern, Karbonfasern und Mischungen hiervon.

7. Vorrichtung nach einem der vorstehenden Ansprüche, **dadurch gekennzeichnet, dass** der Duroplast des Gehäusematerials Z Hilfsstoffe umfasst, die insbesondere ausgewählt sind aus Harzen, Stabilisatoren, Pigmenten, Flammschutzmittel oder Mischungen von diesen.

8. Vorrichtung nach einem der vorstehenden Ansprüche, **dadurch gekennzeichnet, dass** das Gehäuse (3) wenigstens zwei Gehäusesegmente (5, 6) umfasst.

9. Vorrichtung nach Anspruch 8, **dadurch gekennzeichnet, dass** die Gehäusesegmente (5, 6) parallel zur Gehäuselängsrichtung gegenüber einander verschwenkbar sind, insbesondere über ein Scharnier (9).

10. Vorrichtung nach Anspruch 8 oder 9, **dadurch gekennzeichnet, dass** die Gehäusesegmente (5, 6) über eine Arretiereinrichtung (10) verfügen.

11. Vorrichtung nach Anspruch 8, **dadurch gekennzeichnet, dass** die Gehäusesegmente (5, 6) Einschubeinrichtungen aufweisen, über welche die Gehäusesegmente miteinander verbunden sind.

12. Vorrichtung nach Anspruch 11, **dadurch gekennzeichnet, dass** die Einschubeinrichtungen als korrespondierende Nuten und Federn ausgestaltet sind.

13. Vorrichtung nach einem der vorstehenden Ansprüche, **dadurch gekennzeichnet, dass** das Gehäuse (3) über Befestigungselemente verfügt, insbesondere über ein flanschartiges Befestigungselement oder mehrere Befestigungslaschen (13).

14. Vorrichtung nach einem der vorstehenden Ansprüche, **dadurch gekennzeichnet, dass** das Gehäuse (3) und gewünschtenfalls das Brandschutzelement (4) über ein Spritzgussverfahren herstellbar oder hergestellt ist.

15. Vorrichtung nach einem der vorstehenden Ansprüche, **dadurch gekennzeichnet, dass** das Brandschutzelement (4) ein unter Hitzeeinwirkung aufschäumendes Material umfasst, welches ausgewählt ist aus silikatischen Materialien, insbesondere solchen auf Wasserglasbasis, expandierbarem Graphit (Blähgraphit), sowie Kombinationen hiervon.

16. Vorrichtung nach einem der vorstehenden Ansprüche, **dadurch gekennzeichnet, dass** das Brandschutzelement (4) aus mehreren kreissegmentförmigen Einzelelementen (7, 8) aufgebaut ist.

17. Vorrichtung nach einem der vorstehenden Ansprüche, **dadurch gekennzeichnet, dass** das Brandschutzelement (4) in das Gehäuse (3) eingelegt, eingeklinkt, eingeklebt, als Dichtmasse eingespritzt oder eingefüllt ist.

18. Vorrichtung nach einem der vorstehenden Ansprüche, **dadurch gekennzeichnet, dass** in dem Gehäuse (3) eine Dämmeinrichtung ausgebildet ist, insbesondere eine Schalldämmung.

## Claims

1. Device for sealing off a line section, in particular in the form of a pipe collar (1), with a housing (3) and with a lead-through opening (2), formed in the housing (3), for the line section, wherein an intumescent fire protection element (4) is arranged on the inner wall of the housing (3),
**characterized in that** the housing material consists of a thermoset or of a thermoset comprising fillers or auxiliary materials.

2. Device according to claim 1, **characterized in that** the thermoset is selected from phenolic resins, epoxides, aminoplasts, such as melamine resins, melamine formaldehyde resins, polyacrylates, polyester resins, polyurethane resins, silicone resins, cross-linked butyl rubber, ethylene propylene terpolymers (EPDM), polyoxymethylene (POM) or mixtures thereof.

3. Device according to claim 1 or 2, **characterized in that** the thermoset comprises one or more fillers.

4. Device according to claim 3, **characterized in that** the thermoset is a highly filled thermoset.

5. Device according to claim 3 or 4, **characterized in that** the filler content is 20 to 90% by weight, in particular 30 to 85% by weight.

6. Device according to one of claims 3 to 5, **characterized in that** the filler is selected from mineral or organic fillers, in particular from sand, for example quartz sand, quartz flour, clay, loam, talc, mica, kaolin, Neuburg Siliceous Earth, barite, silicate fillers of the aluminum-magnesium-calcium-silicate type, for example wollastonite, chlorite, precipitated silicas, pyrogenic silicas, glass fibers, glass beads, broken glass, carbonates or sulfates, such as ground or precipitated chalk, dolomite, bayerite, gypsum, aluminum/magnesium hydroxides, from magnesium oxides, zinc oxides or calcium oxides, soot, calcium magnesium carbonates, ceramic and mineral fibers, carbon fibers and mixtures thereof.

7. Device according to one of the preceding claims, **characterized in that** the thermoset of the housing material comprises auxiliary materials selected in particular from resins, stabilizers, pigments, flame retardants or mixtures thereof.

8. Device according to one of the preceding claims, **characterized in that** the housing (3) comprises at least two housing segments (5, 6).

9. Device according to claim 8, **characterized in that** the housing segments (5, 6) are pivotable relative to one another in parallel to the longitudinal direction of the housing, in particular via a hinge (9).

10. Device according to claim 8 or 9, **characterized in that** the housing segments (5, 6) have a locking device (10).

11. Device according to claim 8, **characterized in that** the housing segments (5, 6) have insertion devices by means of which the housing segments are connected to one another.

12. Device according to claim 11, **characterized in that** the insertion devices are designed as corresponding grooves and tongues.

13. Device according to one of the preceding claims, **characterized in that** the housing (3) has fastening elements, in particular one flange-like fastening element or several fastening lugs (13).

14. Device according to one of the preceding claims, **characterized in that** the housing (3) and, if desired, the fire protection element (4) can be produced or is produced by an injection molding process.

15. Device according to one of the preceding claims, **characterized in that** the fire protection element (4) comprises a material which foams up under the action of heat and is selected from silicate materials, in particular those based on water glass, expandable graphite (exfoliated graphite), and combinations thereof.

16. Device according to one of the preceding claims, **characterized in that** the fire protection element (4) is constructed from several individual elements (7, 8) in the shape of circular segments.

17. Device according to one of the preceding claims, **characterized in that** the fire protection element (4) is inserted into, latched to, glued into, injected as a sealing compound into or filled into the housing (3).

18. Device according to one of the preceding claims, **characterized in that** an insulating device, in particular a sound insulating device, is formed in the housing (3).

## Revendications

1. Dispositif pour l'isolation d'un faisceau de conducteurs, en particulier sous la forme d'un manchon tubulaire (1), comprenant un logement (3) et une ouverture de passage (2) formée dans le logement (3) pour le faisceau de conducteurs, un élément de protection contre le feu (4) intumescent étant disposé sur la paroi intérieure du logement (3),
**caractérisé en ce que** le matériau du logement se compose d'une matière thermodurcissable ou d'une matière thermodurcissable présentant des charges ou des adjuvants.

2. Dispositif selon la revendication 1, **caractérisé en ce que** la matière thermodurcissable est choisie parmi les résines phénoliques, les époxydes, les aminoplastes tels que les résines de mélamine, les résines de mélamine-formaldéhyde, les polyacrylates, les résines de polyester, les résines de polyuréthane, les résines de silicone, le caoutchouc butyle réticulé, les terpolymères d'éthylène-propylène (EPDM), le polyoxyméthylène (POM) ou les mélanges de ceux-ci.

3. Dispositif selon la revendication 1 ou 2, **caractérisé en ce que** la matière thermodurcissable présente une ou plusieurs charges.

4. Dispositif selon la revendication 3, **caractérisé en ce que** la matière thermodurcissable est une matière thermodurcissable hautement chargée.

5. Dispositif selon la revendication 3 ou 4, **caractérisé en ce que** la teneur en charges est de 20 à 90 % en poids, en particulier de 30 à 85 % en poids.

6. Dispositif selon l'une quelconque des revendications 3 à 5, **caractérisé en ce que** la charge est choisie parmi les charges minérales ou organiques, en particulier parmi le sable, par exemple le sable de quartz, la poudre de quartz, l'argile, la glaise, le talc, le mica, le kaolin, la silice de Neuburg, la barytine, les charges silicatées du type silicate d'aluminium-magnésium-calcium, p. ex. la wollastonite, la chlorite, les silices précipitées, les silices pyrogènes, les fibres de verre, les billes de verre, les débris de verre, les carbonates ou les sulfates, tels que les craies broyées ou précipitées, la dolomite, la bayérite, le gypse, les hydroxydes d'aluminium/de magnésium, les oxydes de magnésium, de zinc ou de calcium, la suie, les carbonates de calcium-magnésium, les fibres céramiques ou minérales, les fibres de carbone et les mélanges de ceux-ci.

7. Dispositif selon l'une quelconque des revendications précédentes, **caractérisé en ce que** la matière thermodurcissable du matériau du logement comprend des adjuvants, qui sont en particulier choisis parmi les résines, les agents stabilisateurs, les pigments, les agents ignifuges ou les mélanges de ceux-ci.

8. Dispositif selon l'une quelconque des revendications précédentes, **caractérisé en ce que** le logement (3) comprend au moins deux segments de logement (5, 6).

9. Dispositif selon la revendication 8, **caractérisé en ce que** les segments de logement (5, 6) peuvent être pivotés l'un par rapport à l'autre parallèlement à la direction longitudinale du logement, en particulier via une charnière (9).

10. Dispositif selon la revendication 8 ou 9, **caractérisé en ce que** les segments de logement (5, 6) disposent d'un dispositif d'arrêt (10).

11. Dispositif selon la revendication 8, **caractérisé en ce que** les segments de logement (5, 6) présentent des dispositifs d'insertion, via lesquels les segments de logement sont reliés l'un à l'autre.

12. Dispositif selon la revendication 11, **caractérisé en ce que** les dispositifs d'insertion sont réalisés sous la forme de rainures et de languettes correspondantes.

13. Dispositif selon l'une quelconque des revendications précédentes, **caractérisé en ce que** le logement (3) dispose d'éléments de fixation, en particulier d'un élément de fixation en forme de bride ou de plusieurs brides de fixation (13).

14. Dispositif selon l'une quelconque des revendications précédentes, **caractérisé en ce que** le logement (3) et éventuellement l'élément de protection contre le feu (4) sont ou peuvent être fabriqués au moyen d'un procédé de moulage par injection.

15. Dispositif selon l'une quelconque des revendications précédentes, **caractérisé en ce que** l'élément de protection contre le feu (4) comprend un matériau moussant sous l'effet de la chaleur, lequel est choisi parmi les matériaux silicatés, en particulier ceux à base de verre soluble, le graphite expansible (graphite expansé) ainsi que les combinaisons de ceux-ci.

16. Dispositif selon l'une quelconque des revendications précédentes, **caractérisé en ce que** l'élément de protection contre le feu (4) est composé de plusieurs éléments individuels (7, 8) en forme de segment de cercle.

17. Dispositif selon l'une quelconque des revendications précédentes, **caractérisé en ce que** l'élément de protection contre le feu (4) est inséré, encliqueté, collé ou injecté ou introduit sous forme de masse d'étanchéité dans le logement (3).

18. Dispositif selon l'une quelconque des revendications précédentes, **caractérisé en ce qu'**un dispositif isolant, en particulier une isolation acoustique, est formé dans le boîtier (3).
